# EUROPEAN PATENT APPLICATION

(11) **EP 4 811 319 A1**
(43) Date of publication of application: **23.09.2026**
(21) Application number: 25165435.6
(22) Date of filing: 21.03.2025
(51) Int. Cl.: G07C 9/00, B60R 25/24

(54) **METHOD OF GRANTING ACCESS TO A MOBILE DEVICE FOR A VEHICLE IN AN EMERGENCY SITUATION**

(71) Applicant: Bayerische Motoren Werke Aktiengesellschaft, 80809 München (DE)
(72) Inventor: Fink, Matthias, 81541 München (DE)

(57) **Abstract**

The invention relates to a method of granting access to a mobile device for a vehicle in a digital key vehicle access system, wherein within the vehicle access system the mobile device and the vehicle are adapted to store a digital key in a secure storage in the respective operating system; the vehicle comprises a main electronic control unit, ECU, and an access ECU controlling access to the vehicle, the method comprising the vehicle receiving a request from the mobile device for granting access to the vehicle; the vehicle determining an emergency condition of the vehicle access system; the vehicle requesting a cryptographic confirmation from the mobile device; the mobile device producing the cryptographic confirmation and sending the cryptographic confirmation to the vehicle; the vehicle verifying the cryptographic confirmation; the vehicle granting access to the vehicle depending on the result of the verification of the cryptographic confirmation. Further, the invention relates to a digital key vehicle access system and an access electronic control unit for such a digital key vehicle access system.

## Description

The present invention is directed to a method of granting access to a mobile device for a vehicle in a digital key vehicle access system, wherein within the vehicle access system the mobile device and the vehicle are adapted to store a digital key in a secure storage in the respective operating system, and the vehicle comprises a main electronic control unit, ECU, and an excess ECU controlling physical access to the vehicle.

Modern vehicle access systems increasingly rely on digital key solutions, which allow users to unlock and start vehicles using mobile devices. The Car Connectivity Consortium (CCC) has established standards that define the interoperability of digital keys across different vehicle manufacturers and mobile device platforms. These digital keys are securely stored within the mobile device and can interact with the vehicle via interfaces such as NFC, Bluetooth, or Ultra-Wideband (UWB).

A digital key can be used to perform cryptographic operations, such as generating signatures, to authenticate the user during vehicle access transactions. Current implementations require explicit identification of the digital key being used for authentication. The management of digital keys and their authentication procedures are essential for ensuring secure vehicle access.

The current digital key vehicle access systems involve several components, including mobile devices, vehicles, and backend systems. The vehicle is typically equipped with an electronic control unit (ECU) that manages among a lot of other tasks digital key functionalities. In many implementations, access is controlled by a combination of a main ECU and an access ECU, with the latter responsible for physical access control, such as door unlocking via NFC.

A digital key is capable to perform signatures. Signatures are either created during the execution of CCC protocols, for example, during a standard transaction between a mobile device and a vehicle, or are created on demand. However, for a correct execution of a signature command given by a vehicle to a mobile device, it is usually required to explicitly state the key identifier that shall perform the signature.

A fundamental challenge arises in situations where the main ECU is not responding to requests or is completely down, making it impossible to authenticate a digital key through the standard process for granting access to the vehicle. The access ECU, despite having limited cryptographic capabilities, may still be functional, but usually lacks access to the secure storage of the cryptographic keys normally managed by the main ECU.

This creates a security gap in emergency situations, where it is necessary to grant access to at least the interior of the vehicle.

It is an object of the present invention to provide a method of granting access to a mobile device for a vehicle in a digital key vehicle access system, avoiding or at least mitigating the above mentioned downsides, and in particular enabling the vehicle to grant access for the vehicle to a mobile device in the situation in which the main ECU cannot be reached by an excess ECU

This object is solved by a method according to claim 1. Further embodiments of the invention are defined by the claims depending on claim 1.

According to the invention, a method of granting access to a mobile device for a vehicle in a digital key vehicle access system is proposed, wherein within the vehicle access system the mobile device and the vehicle are adapted to store a digital key in a secure storage in the respective operating system, and the vehicle comprises a main electronic control unit, ECU, and an access ECU controlling physical access to the vehicle. The method further comprises the vehicle receiving a request from the mobile device for granting access to the vehicle, the vehicle determining an emergency condition of the vehicle access system, the vehicle requesting a cryptographic confirmation from the mobile device, the mobile device producing the cryptographic confirmation and sending the cryptographic information to the vehicle, the vehicle verifying the cryptographic confirmation, the vehicle granting access to the vehicle depending on the result of the verification of the cryptographic confirmation.

The method according to claim 1 has the advantage that the vehicle only grants access to the mobile device for the vehicle after the mobile device has produced a cryptographic confirmation requested by the vehicle. Thus, the vehicle can be confident that the mobile device is indeed allowed to receive access for the vehicle.

According to a preferred embodiment, the steps of receiving the request, determining the emergency condition, requesting a confirmation, verifying the confirmation and/or granting access are performed by the access ECU. The emergency situation may be determined by the access ECU having no connection to the main ECU, the main ECU having declared such emergency situation, or the access ECU having information about an emergency situation. In this case, the access ECU is handling the access to the vehicle without any further communication with the main ECU.

According to a specific embodiment, the cryptographic confirmation comprises signing a challenge and/or verifying an emergency token. The challenge may be a nonce, i.e. an arbitrary number or other information only used once for challenging the signing process. The challenge may be produced by the access ECU and sent to the mobile device in the context of requesting the cryptographic confirmation. The emergency token is a different concept.

The emergency token requires an exchange of the emergency token before the emergency situation arises. Then the emergency token is present on the mobile device and in the access ECU and it can be verified whether the emergency token on the mobile device and the emergency token present in the access ECU are a match.

According to a preferred embodiment, the step of producing the cryptographic confirmation comprises producing a fake cryptographic confirmation. When, for example, the mobile device is able to verify an emergency token and the verification fails, the mobile device may produce a fake cryptographic confirmation in order to not give a possible attacker unnecessary information.

According to a preferred embodiment, requesting a cryptographic confirmation comprises sending a SIGN command from the vehicle to the mobile device. Usually, a SIGN command requires to state the identifier of the digital key that shall create the signature. However, according to the present invention, the SIGN command may provide a vehicle identifier. Thus, the mobile device receiving the SIGN command is able to resolve the digital key with the vehicle identifier.

Preferably, requesting a cryptographic confirmation comprises the vehicle sending a vehicle identification, an emergency token and/or a challenge to the mobile device. With this information, the mobile device may identify the digital key required for the cryptographic confirmation, may use the emergency token to verify the validity of the request and may use the challenge as the content of the signature.

According to a preferred embodiment, the mobile device uses the vehicle identification to identify the digital key corresponding to the vehicle.

In particular, producing the cryptographic confirmation comprises signing the challenge with the digital key of the vehicle.

According to an embodiment, within the vehicle access system, an emergency token is transferred from the vehicle to the mobile device. Thus, the mobile device may verify the validity of the request to a cryptographic confirmation.

In this context, it is preferred that the transmission of the emergency token from the vehicle to the mobile device is performed in connection with an owner pairing of the vehicle and the mobile device. Usually, during the owner pairing, cryptographic information is exchanged. Thus, this may include the propagation of the emergency token.

Further, it may be preferred from time to time to provide a new emergency token to the vehicle and all mobile devices holding a digital key to the vehicle. As the emergency token is a 'global' information it may need to be rotated from time during the use by an individual. A vehicle OEM backend may provide a new emergency token to the vehicle and all mobile devices that hold a digital key for it while the vehicle is being used by the same person.

According to a further preferred embodiment, an emergency token is synchronized. In the case of a change of the vehicle identification and/or a change of the digital key data. A change of the vehicle identity may happen, for example, when the vehicle is being demapped from a vehicle fleet, e.g. when selling it. Also, a change in the digital key data may be necessary under certain circumstances.

According to an embodiment, the communication between the mobile device and the vehicle may be based on NFC.

The invention is now described in the following in an exemplary manner with reference to the accompanying drawing, wherein
- Fig. 1: shows in a schematic view an embodiment of a digital key vehicle access system;
- Fig. 2: shows an embodiment of a method of granting access to a mobile device for a vehicle in an emergency situation,
- Fig. 3: shows an embodiment of a process of synchronizing emergency access information to the vehicle;
- Fig. 4: shows an embodiment of a process of propagating an emergency token to a mobile device.

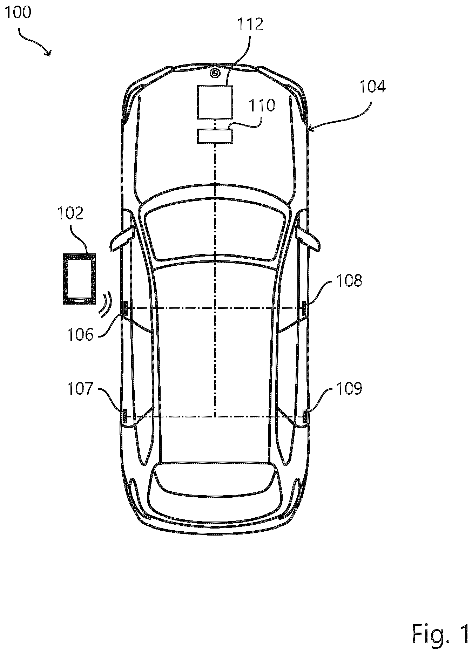

Fig. 1 shows an embodiment of a digital key vehicle access system 100. The system 100 comprises, in the embodiment shown in Fig. 1, a mobile device 102 and a vehicle 104. The mobile device 102 may be a portable electronic device, such as a smartphone, a smartwatch, a tablet PC or a portable key fob. The mobile device 102 is adapted to trigger vehicle functions on the vehicle 104 via a digital communication channel using a digital key. The vehicle functions may include, for example, locking or unlocking vehicle flaps, such as doors, etc. or, for example, putting the vehicle in a state in which it is ready to drive.

The locking/unlocking of doors is usually handled by a main electronic control unit (ECU) 112, which has control over a central locking system. Nowadays, keyless entry systems allow users to unlock a vehicle 104 without physically using a key. Usually, wireless communication is used to authenticate the mobile device 102 before granting access. Also, different communication systems are used for the various communication requirements, like locating, authenticating a mobile device or/and effecting functions of the vehicle. One part of the locking/unlocking communication system nowadays is near-field communication, NFC, which is a short-range wireless technology enabling secure communication between devices.

In the embodiment of Fig. 1, four NFC readers 106, 107, 108, 109 are connected with an access ECU 110. The NFC readers 106 to 109 are capable of communicating according to the NFC standard with a mobile device 102. Due to the nature of the NFC communication, a communication is even possible if low or no power is present on the mobile device 102. Also, it is likely that the access ECU 110 is still operational in a case where the main ECU 112 is not fully operating, is not communicating with the access ECU 110, or is not operating at all. The NFC readers 106 to 109 are adapted to lock and unlock the respective vehicle door.

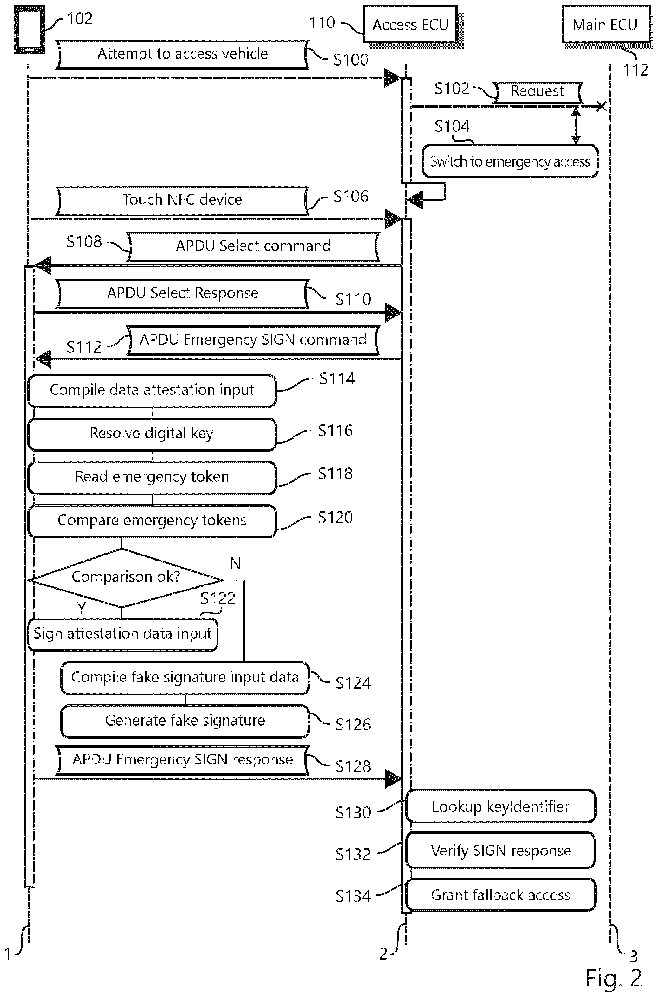

This scenario of the main ECU being not reachable by the access ECU 110 is described in more detail in Fig. 2.

The entities involved in the described method - mobile device 102, access ECU 110, and main ECU 112, are shown in Fig. 2 with corresponding timelines 1 ,3, 4 representing the flow of time from up to down. The timelines are illustrated by dashed lines, messages or communications are represented by arrows and method steps are described in boxed fields.

The method of Fig. 2 begins in a step S100 by a mobile device 102 attempting to access the vehicle 104. This access attempt is detected by the access ECU 110, which in turn forwards a corresponding request to the main ECU 112, step S102. If the main ECU 112 does not respond within a certain time frame, a timeout occurs and the access ECU 110 switches to an emergency access state (S104).

This scenario may happen when the vehicle 104 has a breakdown of any kind and the main ECU 112 holding the digital key logic is not reachable or no longer responding. The access ECU 110 is adapted to operate autonomously and is able to grant access to the vehicle 104 in a case the main ECU 112 is not reachable.

In an attempt to open vehicle 104, the user will touch the mobile device 102, being an NFC device, to one of the exterior NFC readers 106 to 109 (step S106). The access ECU 110 detects by one of the NFC readers 106 to 109 the approach of the mobile device 102 and initiates an NFC communication with the mobile device 102.

As a next step (S108) the access ECU 110 sends an APDU select command to the mobile device 102 in order to establish a communication with the mobile device 102 and to access the correct application before executing further commands. In step S110, the mobile device 102 sends the appropriate APDU select response, which is received by the access ECU 110.

Then, the access ECU 110 initiates and sends an APDU emergency SIGN command (step S112). The APDU emergency SIGN command is different from APDU SIGN commands. The APDU SIGN command is usually used in the CCC standard context by comprising a key identifier for identifying the digital key to be used for the signature process. The emergency SIGN command comprises instead a vehicle identifier, an emergency token and a challenge. The vehicle identifier allows the mobile device 102 to identify the digital key with which the challenge is to be signed.

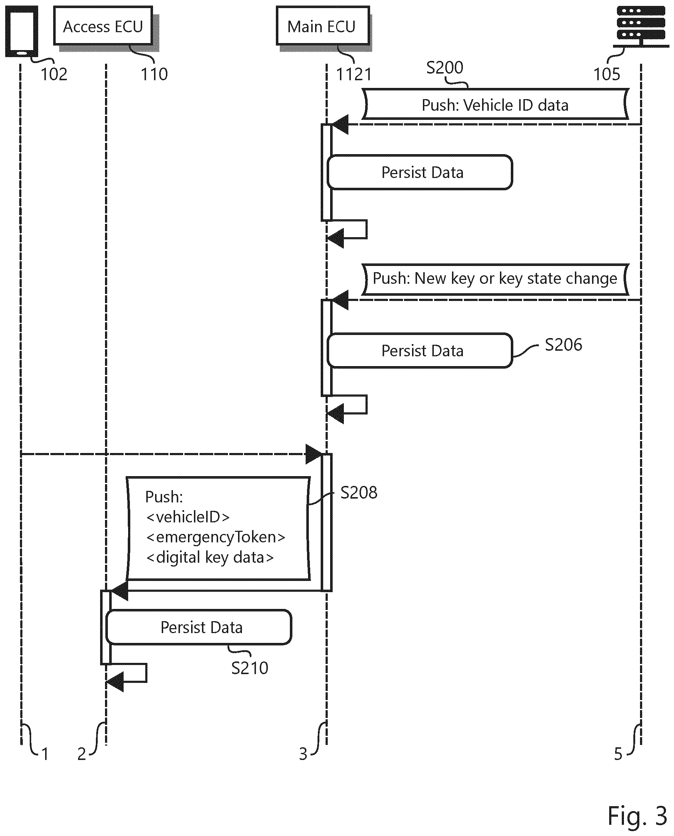

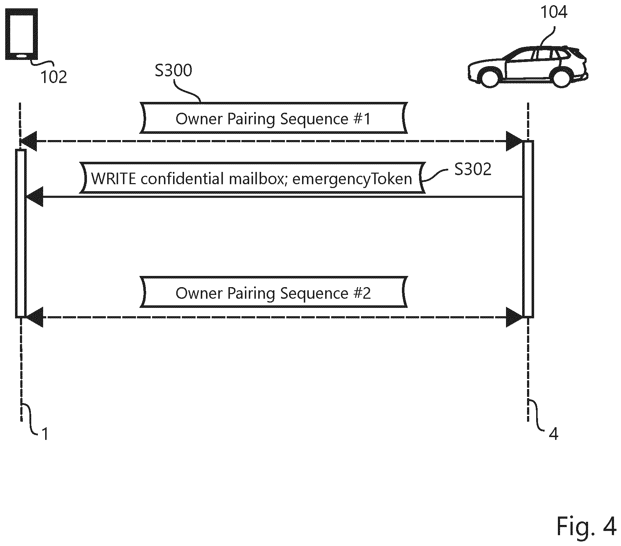

The emergency token is a token that is present in the mobile device 102 and in the vehicle 104, respectively, in the access ECU 110. The synchronization and propagation of the emergency token is described later with reference to figures 3 and 4. The nature of the emergency token present in the mobile device 102 and in the access ECU 110 is such that it can be determined whether both tokens match. This means that both emergency tokens are either identical or have features that allow for a comparison regarding a match.

The challenge can be a nonce or any other cryptographic challenge.

After receiving the APDU emergency SIGN command, the mobile device 102 compiles the data attestation input, step S114, and resolves the digital key with the vehicle identifier, step S116.

Then, the mobile device 102 reads the emergency token from the digital key mailbox, S118, and compares the emergency token coming from the access ECU 110 and the emergency token read from the digital key mailbox, S120.

Depending on the result of the comparison in step S120, the mobile device 102 either signs the data attestation input with its digital key, S122, or if the two emergency tokens do not match, either returns an error (not shown in Fig. 2) or compiles fake signature input data, S124, and generates a fake signature, S126. This is to avoid giving a possible attacker unnecessary information about the digital key of the mobile device 102.

In any case, the mobile device 102 sends an APDU emergency SIGN response comprising the digital signature and the key identifier, step S128.

After receiving the SIGN response from the mobile device 102, access ECU 110 looks up the key identifier, S130, and verifies with the found digital key from the SIGN response, S132. In case the verification is successful, the access ECU 110 grants fallback/emergency access to the vehicle 102, S134.

Figure 3 shows a method of synchronizing emergency access information from a vehicle OEM backend 105 to the vehicle 104. When the vehicle 104 is changing its identity, e.g. when the vehicle 104 is being de-mapped from a car fleet when selling it, the corresponding information needs to be refreshed or updated. This is performed by the vehicle OEM backend 105 pushing the corresponding vehicle identity data to the main ECU 112 of the vehicle 104, step S200. The vehicle data may comprise a vehicle identifier, BLE keys, an emergency token, etc. In addition, the vehicle may generate a new vehicle signature key. This information is then persisted on the main ECU 112 of the vehicle 104, step S202.

The steps described are useful in an update of the basic vehicle configuration. Under other circumstances the key data may change. Then the new key attestation (which may also be received directly from a digital key device) or the change of the key state are pushed from the vehicle OEM backend 104 to the main ECU 112 of the vehicle 104, step S204. Afterwards the new or updated key data are persisted, step S206.

Also, the vehicle identifier, the emergency token and the digital key data are synchronized with the access ECU 110 in case they have changed or are outdated, step S208. Afterwards the data are persisted on the access ECU 110, S210.

Figure 4 illustrates a method of propagating the emergency token from a vehicle 104 to a mobile device 102. The propagation of the emergency token is usually performed during a first owner pairing, step S300. During the owner pairing, the emergency token is written to a defined offset in the digital key mailbox of the device 102. This is performed with a corresponding write command, step S302. With this command, the vehicle provides the necessary information to the confidential mailbox. In the case of a shared key, it is the vehicle OEM backend 105 passing the emergency token to a shared key with confidential mailbox data. During CCC key sharing, the vehicle OEM server provides the contents of the confidential mailbox to the receiver device, which holds the digital key's immobilizer token, in case the key has driving privileges, and the emergency token. As the emergency token is a 'global' information it may need to be rotated from time during the use by an individual. The vehicle OEM backend 105 may provide a new emergency token to the vehicle 104 and all mobile devices 102 that hold a digital key for it.

Summarizing, although the access ECU 110 has very limited security level and very limited cryptology performance, it may serve as an access gateway in an emergency situation. This is made possible by holding public information such as the vehicle identifier or public keys in the access ECU 110. When a mobile device 102 is in contact with one of the NFC readers 106 to 109 of the access ECU 110 and the access ECU detects an emergency situation in which the main ECU-112 may not be reachable due to any reason, it switches into emergency mode.

In the emergency mode, the access ECU 110 will request a signature from the mobile device 102, which is then verified by the access ECU 110. In case the verification is positive, the vehicle 104 will grant access.

This emergency protocol can be performed by introducing a SIGN command that can be called inter alia with the vehicle identifier - since a selection of the target signing key is not possible when the vehicle holds multiple keys - and an emergency token, along with a challenge, which may be e.g. a cryptographical nonce.

An emergency token is defined, which is provided by the vehicle 104 to the digital key's confidential mailbox during owner pairing or by the OEM backend 105 to a shared key as part of the encrypted confidential mailbox data. A protected SIGN command is defined with a vehicle identifier and an emergency token as input parameters. With the vehicle identifier, a device can identify the requested digital key for signature creation. The device will create the requested signature when the correct emergency token was provided, i.e. it matches the digital keys emergency token residing in the mailbox. Or in case of an error, it will reject the command or return fake data. The signature will be verified on the vehicle site and access will be granted on success.

## Claims

1. A method of granting access to a mobile device (102) for a vehicle (104) in a digital key vehicle access system (100), wherein within the vehicle access system (100)
- the mobile device (102) and the vehicle (104) are adapted to store a digital key in a secure storage in the respective operating system;
- the vehicle (104) comprises a main electronic control unit, ECU, (112) and an
access ECU (110) controlling access to the vehicle (104),
the method comprising:
- the vehicle (104) receiving (S100) a request from the mobile device (102) for granting access to the vehicle (104);
- the vehicle (104) determining (S104) an emergency condition of the vehicle access system (100);
- the vehicle (104) requesting (S112) a cryptographic confirmation from the mobile device (102);
- the mobile device (102) producing (S122, S126) the cryptographic confirmation and sending (5128) the cryptographic confirmation to the vehicle (104);
- the vehicle (104) verifying (S132) the cryptographic confirmation;
- the vehicle (104) granting (S134) access to the vehicle (104) depending on the result of the verification of the cryptographic confirmation.

2. The method of claim 1, wherein the steps of receiving the request (S100), determining the emergency condition (S104), requesting a confirmation (S112), verifying the confirmation (S132), and/or granting access (S134) are performed by the access ECU (110).

3. The method of one of the preceding claims, wherein the cryptographic confirmation comprises signing (S122) a challenge and/or verifying (S120) an emergency token.

4. The method of claim 3, wherein the step of producing the cryptographic confirmation comprises producing (S126) a fake cryptographic information.

5. The method of one of the preceding claims, wherein requesting a cryptographic confirmation comprises sending (S122) a SIGN command from the vehicle (104) to the mobile device (102).

6. The method of one of the preceding claims, wherein requesting a cryptographic confirmation comprises the vehicle sending (S112) a vehicle identification, an emergency token, and/or a challenge to the mobile device.

7. The method of claim 6, wherein the mobile device uses the vehicle identification to identify (S116) the digital key corresponding to the vehicle (104).

8. The method of claim 7, wherein producing the cryptographic confirmation comprises signing (S122) the challenge with the digital key of the vehicle.

9. The method of one of the preceding claims, wherein within the digital vehicle access system (100) an emergency token is transferred (S302) from the vehicle (104) to the mobile device (102).

10. The method of claim 9, wherein the transmission (S302) of the emergency token is performed in connection with an owner pairing of the vehicle (104) and the mobile device (102).

11. The method of claims 9 or 10, wherein from time to time a new emergency token is provided to the vehicle and all mobile devices holding a digital key to the vehicle.

12. The method of one of the preceding claims, wherein an emergency token is synchronized (S200, S204) in the case of a change of the vehicle identification and/or a change of the digital key data.

13. The method of one of the preceding claims, wherein communication between the mobile device (102) and the vehicle (104) is based on NFC.

14. A digital key vehicle access system (100) for performing a method according to one of the claims 1 to 13.

15. An access electronic control unit (110) for the digital key vehicle access system (100) according to claim 14.
